# EUROPÄISCHE PATENTSCHRIFT

(11) **EP 0 954 750 B1**
(45) Veröffentlichungstag und Bekanntmachung des Hinweises auf die Patenterteilung: **02.04.2003**
(21) Anmeldenummer: 98907830.8
(22) Anmeldetag: 19.01.1998
(51) Int. Cl.: G01N 29/14

(54) **BAUTEIL AUS DUKTILEM METALLISCHEM WERKSTOFF UND VERFAHREN ZUR BESTIMMUNG VON VERFORMUNGEN UND/ODER BELASTUNGEN MITTELS SCHALLEMISSIONSANALYSE**
COMPONENTS MADE OF DUCTILE METALLIC MATERIAL AND METHOD FOR DETERMINING DEFORMATIONS AND/OR STRAINS BY MEANS OF SOUND EMISSION ANALYSIS
COMPOSANTS EN MATERIAUX METALLIQUES DUCTILES ET PROCEDE POUR LA DETERMINATION DES DEFORMATIONS ET/OU DES CONTRAINTES PAR ANALYSE D'EMISSIONS SONORES

(30) Priorität: 20.01.1997 DE 19701776
(43) Veröffentlichungstag der Anmeldung: 10.11.1999
(73) Patentinhaber: FRAUNHOFER-GESELLSCHAFT ZUR FÖRDERUNG DER ANGEWANDTEN FORSCHUNG E.V., 80636 München (DE)
(72) Erfinder: KÜHNICKE, Horst, D-01324 Dresden (DE); SCHNEIDER, Lothar, D-01640 Coswig (DE); ZOUHAR, Gustav, D-01237 Dresden (DE); WAAG, Ulf, D-01069 Dresden (DE)
(74) Vertreter: Pfenning, Meinig & Partner GbR
(86) Internationale Anmeldenummer: DE9800162
(87) Internationale Veröffentlichungsnummer: WO98031490

(56) Entgegenhaltungen:
- US-A- 4 297 885
- US-A- 4 704 892
- US-A- 5 423 222
- DATABASE WPI Section EI, Week 8451 Derwent Publications Ltd., London, GB; Class S03, AN 84-317268 XP002070987 & SU 1 089 512 A (UNIV ROST)

## Beschreibung

Die Erfindung betrifft Bauteile aus duktilen metallischen Werkstoffen, deren Verformung oder die auf diese einwirkende Belastung mittels Schallemissionsanalyse bestimmt werden soll. Dabei kann einmal eine Überwachung der Bauteile während des Betriebes durchgeführt werden, so daß ein Erreichen und/oder Überschreiten von zulässigen Spannungen im elastischen Bereich sowie Beschädigungen infolge von Überlastungen sehr schnell und sicher erfaßt werden können. Eine andere Möglichkeit besteht darin, die Bauteile in der Entwicklungsphase zu verwenden und beispielsweise das Verformungsverhalten, bei den tatsächlich auftretenden verschiedenen möglichen Belastungen zu ermitteln und für die letztendliche Konstruktion zu berücksichtigen. Bei bekanntem Verformungsverhalten ist es selbstverständlich außerdem möglich, auch die jeweilige einwirkende Belastung zu bestimmen. Insbesondere ist der Einsatz bei hochbeanspruchten, kostenintensiven Bauteilen, beispielsweise im Automobilbau, der Luftfahrt oder im Schwermaschinenbau möglich, sowie bei Bauteilen, deren Beschädigungen ein hohes Gefährdungspotential zur Folge hat.

Als kostengünstiges und zerstörungsfreies Prüfverfahren ist es bekannt, die Schallemissionsanalyse bei verschiedenen Bauteilen einzusetzen. Die Überwachung kann dabei imanent und in integraler Form am Bauteil vorgenommen werden. Bei der Schallemissionsanalyse werden submikroskopische lokale Verformungen registriert, die die Schädigung des Materials bei einer Belastung begleiten. Die bei Belastung durch die Verformung auftretenden Schallemissionen werden dabei mit empfindlichen piezoelektrischen Sensoren gemessen, die bevorzugt an der Oberfläche des zu prüfenden Bauteiles angekoppelt werden. Die Ankopplung kann dabei dauerhaft aber auch in lösbarer Form erfolgen.

Insbesondere bei hochbeanspruchten Bauteilen, an die hohe Sicherheitsanforderungen gestellt werden, werden bevorzugt duktile metallische Werkstoffe, z.B. duktile Stähle verwendet. Da die duktilen metallischen Werkstoffe nur geringfügig schallemissionsaktiv sind, kann die Schallemissionsanalyse, wenn überhaupt, nur bedingt eingesetzt werden, da die auswertbaren Signale und dabei insbesondere die meßbaren Amplituden in einem Bereich liegen, der einer Auswertung nicht zugänglich ist und zumindest die erforderliche Meßgenauigkeit nicht ausreichend groß ist.

Mit US 4,704,892 ist ein Probenkörper für die zerstörungsfreie Werkstückprüfung bekannt, bei dem lokal gezielt, verschieden geformte Defekte aus Korund oder aus verschiedenen Karbiden, entsprechend des Einsatzes eines Werkstückes verteilt angeordnet werden sollen. Solche Defekte sollen vorschlagsgemäß eine Größe von mindestens 1 mm bis zu 40 mm aufweisen. Die Defekte können z.B. in die Schmelze einer Schweißnaht eingefügt oder in mechanisch im Probenkörper erzeugte Hohlräume eingesetzt werden. Für den Erhalt repräsentativer Meßwerte müssen daher bereits bei der Herstellung des Probenkörpers Kenntnisse über die auf ein solches Werkstück tatsächlich einwirkenden Belastungen vorhanden sein, um mit den Meßwerten vernünftige aussagekräftige Aussagen zu erhalten. Mit der starken Beeinflussung der relativ großformatigen Defekte in einem solchen Probenkörper können Aussagen über das Langzeitverhalten so gut wie nicht getroffen werden. Außerdem führt die Größe der eingebauten Defekte zu einer relativ hohen Beeinflussung der Werkstoff-Festigkeit, so daß die Bruchgrenze eines so präparierten Probenkörpers wesentlich eher erreicht wird, als dies bei normalen Bauteilen der Fall sein dürfte.

Des weiteren ist in US 5,423,222 ein Verfahren zur Bestimmung von Verformungen bei Dichtelementen beschrieben. Dabei wird nach dieser Lehre so vorgegangen, daß in einem solchen Dichtelement oder auch einem Straßenbelag ein Markierungsstoff aus einzelnen Partikeln gleichmäßig mit einer bestimmten Menge verteilt wird. Im Nachgang nach einer Verformung wird die geänderte Dichte und Verteilung der Partikel der Markierungssubstanz bestimmt, wobei eine geeignete Energiestrahlung verwendet wird. Als mögliche Eigenschaftsänderungen, die für die Messung ausgenutzt werden können, werden elektrische, magnetische, akustische oder optische Eigenschaftsänderungen genannt, wobei die Änderung der akustischen Impedanz des so präparierten Materials genannt worden ist und im letztgenannten Fall Ultraschall als geeignete Energiestrahlung Verwendung finden dürfte.

Es ist daher Aufgabe der Erfindung, duktile metallische Werkstoffe so zu modifizieren und ein Verfahren vorzuschlagen, so daß Bauteile aus solchen Werkstoffen der Schallemissionsanalyse mit ausreichender Genauigkeit zugänglich sind.

Erfindungegemäß wird diese Aufgabe bei Bauteilen mit den Merkmalen des Patentanspruchs 1 und den Merkmalen des Anspruchs 16 für das Verfahren gelöst. Vorteil hafte Ausgestaltungsformen und Weiterbildungen der Erfindung ergeben sich bei Verwendung der in den untergeordneten Ansprüchen enthaltenen Merkmale.

Dem duktilen metallischen Werkstoff, der bevorzugt ein schweißbarer Baustahl aber auch eine duktile Leichtmetallegierung (z.B. Aluminiumlegierung) sein kann, wird zur Erhöhung des Schallemissionsverhaltens ein Stoff partikelförmig zugesetzt, der zumindest im Temperaturbereich unterhalb 400 ° C spröde ist. Dabei sollten die Partikel zumindest im Einsatztemperaturbereich des jeweiligen Bauteils spröde sein, z.B. bei Raumtemperatur.

Günstig ist es, wenn die Partikel auch im Umformungstemperaturbereich plastisch verformbar sind, so daß eine bestimmte Struktur (gestreckt oder Nadelform) der Partikel, beispielsweise bei einer Kaltverfestigung erreicht werden kann.

Für bestimmte Werkstoffe oder Bauteile kann es vorteilhaft sein, die gestreckten nadelförmigen orthognal zur Beanspruchungsrichtung anzuordnen bzw. auszubilden. In solchen Fällen können auch annähernd kegelförmige Partikel im Bauteil enthalten sein.

Es hat sich nun gezeigt, daß solche Bauteile vorteilhaft mit einem pulvermetallurgischen Verfahren (Sintern, Heißisostatisches Pressen u.a.) hergestellt werden können, wobei eine relativ homogene Verteilung der spröden Partikel eingestellt werden kann.

Die Partikel können aber auch ausgehend von der Oberfläche durch Einwalzen, Einpressen oder Plattieren in das metallische Material eingebracht werden. Dabei kann eine lokal differenzierte Anordnung der spröden Partikel im Bauteil erreicht werden, was für bestimmte Anwendungen günstig sein kann. So können kritische Bauteilbereiche schallemmisionsaktiver werden, als unkritische Bereiche. Die letztgenannten Verfahren führen zu einer Anhäufung der Partikel im Oberflächenbereich der Bauteile und insbesondere Spannungen, die sich in diesem Bereich maximal auswirken, können besser detektiert werden. Die Einbringung der Partikel kann dabei mit einem ansonsten ohnehin erforderlichen Verfahrensschritt für die Herstellung des Bauteils eingebracht werden (Formgebung).

Der Anteil der spröden Partikel im Metall kann relativ gering gehalten werden und die geringe Menge führt nicht bzw. nur geringfügig dazu, daß die eigentlich vom Grundwerkstoff des Bauteils gewünschten Eigenschaften negativ beeinflußt werden. Die erforderlichen Anteile liegen unterhalb 20 Vol.-%, es können aber bereits auch Anteile unterhalb 2 Vol-% und Anteile unterhalb 1 Vol-% bewirken bereits eine stark verbesserte Schallemissionsaktivität, die jetzt auch duktile Werkstoffe der Schallemissionsanalyse zugänglich macht.

Die Größe der Partikel sollte im Bereich zwischen 1 und 200 µm, bevorzugt zwischen 1 und 100 µm gehalten sein.

Als geeignete Materialien für die erfindungsgemäß zuzusetzenden Partikel haben sich neben MnS, SiO₂, Quarzglas, technische Gläser oder Glaslot auch Boride, Nitride oder nichtoxidische Keramikwerkstoffe erwiesen, wobei sich verschiedene Gläser mit einem gewissen Anteil an Blei als besser geeignet erwiesen haben als reines SiO₂. Auch Glaslote sind geeignet, die neben Blei auch Bor und andere Elemente enthalten.

Für die Auswahl sollte der jeweilige Schmelzpunkt berücksichtigt werden. Bei niedrigem Schmelzpunkt sind entsprechend tiefere Umformtemperaturen für den Werkstoff möglich. Dabei ist jedoch auch zu beachten, daß sich der Einsatztemperaturbereich für die Bauteile entsprechend verkleinert.

Die bereits als vorteilhaft beschriebene gestreckte Form der Partikel, die im Schliffbild nadelförmig erkennbar ist, kann durch plastische Verformung durch mechanische oder thermomechanische Behandlung erreicht werden. In Verbindung mit einem pulvermetallurgischen Herstellungsverfahren können die mechanischen Eigenschaften (z.B. Festigkeit und Bruchzähigkeit) in weiten Bereichen variiert werden.

Für die verschiedenen Bauteilformen und metallischen Basismaterialien kann die Schallemissionsaktivität durch gezielte Auswahl der Anzahl, der Art, der Größe und ggf. der Anordnung der spröden Partikel optimiert werden. Ein mögliches Kriterium für die Optimierung kann das Schallemissionsverhalten an der Streckgrenze des duktilen metallischen Werkstoffes sein. Die gezielte Einstellung der Schallemissionsaktivität kann unter Berücksichtigung der erhöhten Schallemission an der Streckgrenze oder auch nur für für den gesamten Verformungsbereich bis zur Bruchgrenze optimiert werden.

Da bei der Schallemissionsanalyse auch die Dekohäsion an den Grenzflächen von Partikeln und duktilem metallischem Matrixwerkstoff ausgenutzt werden kann, ist es günstig, Partikel eines Werkstoffes mit kleinerem Wärmeausdehnungskoeffizienten als dem des Matrixwerkstoffes zu verwenden. Dadurch wirkt nach dem Abkühlen eine gewisse Vorspannungskraft durch das Matrixmaterial auf die Partikel, die jedoch nicht zum vorzeitigen Bruch der Partikel führen sollte.

Die erfindungsgemäßen Bauteile sind besonders für die Auslegung für bestimmte Anwendungsgebiete geeignet, um bereits bei der Konstruktion bestimmte Belastungen, die auf das jeweilige Bauteil wirken, berücksichtigen zu können. Dabei können Schwachpunkte erfaßt und konstruktiv ausgeglichen werden.

Eine weitere Möglichkeit, die sich bei Anwendung der erfindungsgemäßen Bauteile bietet, ist die Bestimmung der tatsächlich einwirkenden verschiedenen Belastungen. Es können Biege-, Zug-, Torsions- und Druckspannungen mittels Schallemissionsanalyse detektiert werden.

Auch eine Überwachung der am Bauteil während des Betriebes einwirkenden Belastungen und die dadurch hervorgerufenen Verformungen kann durchgeführt werden, um bei Erreichen oder Überschreiten vorgegebener Grenzwerte ein Signal zu generieren und einen Austausch eines kritisch vorgeschädigten Bauteils zu initiieren.

Die Messung erfolgt dabei durch Ankopplung empfindlicher Piezosensoren am Bauteil, deren Meßsignale nach ausreichender Verstärkung ausgewertet werden können. Dabei können am Bauteil ein Sensor, vorteilhaft aber auch mehrere Sensoren lokal getrennt angekoppelt sein. Eine zeitlich verschobene oder parallel Auswertung der Schallemissionssignale kann für jeden Sensor selektiert durchgeführt werden. Die Verwendung von mehreren Sensoren kann bei Auswertung des jeweiligen Zeitverzuges der gemessenen Signale die Möglichkeit erschließen eine lokale Zuordnung der Meßsignale am Bauteil zu ermöglichen.

Bei Verwendung der erfindungsgemäßen Bauteile ist es nunmehr überraschend möglich, mit einer einfachen Meßtechnik auch bei duktilen Metallen die Schallemissionsanalyse mit ausreichender Genauigkeit anzuwenden. Dabei kann eine vereinfachte sensornahe Meß- und Bewertungselektronik verwendet werden und die Schallemissionsaktivität optimiert werden.

Solche erfindungsgemäßen Bauteile können vorteilhaft so gestaltet werden, daß ihre Kontur lokal begrenzt Schwachstellen (z.B. Kerben, Querschnittsverringerungen) vorgibt, die je nach Verwendung ein Signal liefern, bei dem die Bruchsicherheit bzw. Streckgrenze des Bauteils noch nicht erreicht ist oder in der Konstruktionsphase entsprechende Einflüsse bei der Formgestaltung und Werkstoffauswahl geprüft werden sollen.

Bei der Bestimmung von Verformungen und/oder Belastungen, die an einem Bauteil aus einem duktilen metallischen Werkstoff wirken, der gemäß dem Anspruch 1 spröde Partikel enthält, wird eine Schallemissionsanalyse durchgeführt und dabei die Anzahl von gemessenen Burstsignalen ermittelt und diese Anzahl dann zeit-, spannungs- und/oder dehnungsabhängig bestimmt und bewertet, so daß z.B. das Überschreiten von vorgebbaren Kräften bzw. Momenten, die auf ein solches Bauteil auch während des Einsatzes überwacht werden kann. Wird eine solche Überschreitung festgestellt, kann dann gegebenenfalls ein entsprechendes Alarmsignal generiert werden, so daß der erforderliche Austausch des entsprechenden Bauteils erkannt werden kann. In der Regel wird daher, aus Gründen der Einfachheit die zeitabhängige Bestimmung der Anzahl der gemessenen Burstsignale (Ereignisrate, ringcountsrate) vorgezogen werden, da dies elektronisch relativ einfach möglich ist.

Die Meßgenauigkeit einer solchen Schallemissionsanalyse kann weiter verbessert werden, wenn lediglich die Anzahl von Burstsignalen, die oberhalb eines vorgebbaren Grenzwertes liegen, bestimmt und berücksichtigt werden. Ein solcher Grenzwert (Schwellwert) kann bei Messungen mit empfindlichen piezoelektrischen Sensoren, insbesondere unter tatsächlichen Einsatzbedingungen mit der Erfindung erhöht werden, so daß die Schallemissionsanalyse nicht nur unter Laborbedingungen durchgeführt, sondern mit dem höheren Grenzwert der Störgrößeneinfluß verringert wird.

Das Erfordernis des Austausches eines erfindungsgemäßen Bauteils kann auch dadurch festgestellt und angezeigt werden, daß die bestimmte Anzahl von Amplituden mit mindestens einem werkstoff- und/oder bauteilspezifischen vorgebbarem Maximalwert verglichen wird, so daß bei Überschreiten dieses Maximalwertes ein entsprechendes Signal generiert wird.

Nachfolgend soll die Erfindung an Ausführungsbeispielen näher beschrieben werden.

Dabei zeigt:
- Fig. 1: ein Blockschaltbild einer Meßanordnung zur Schallemissionsanalyse;
- Fig. 2: eine schematische Darstellung eines Bauteils im Zugversuch;
- Fig. 3: ein Diagramm der gemessenen Spannung mit Schallemissionsanalyse für ein herkömmliches Bauteil;
- Fig. 4: ein Diagramm der gemessenen Spannung mit Schallemissionsanalyse für ein erfindungsgemäßes Bauteil;
- Fig. 5: ein vergrößertes Schliffbild eines Werkstoffes für ein erfindungsgemäßes Bauteil mit im Basismaterial aufgenommenen spröden Partikeln.
- Fig. 6: ein Diagramm eines Bauteils gemäß Figur 3 mit weiteren Bezugsgrößen;
- Fig. 7: ein Diagramm eines Bauteils gemäß Figur 4 mit weiteren Bezugsgrößen;
- Fig. 8: ein Diagramm der ganzen Spannung mit Schallemissionsanalyse an ein herkömmliches Bauteil aus AlLi 5;
- Fig. 9: ein Diagramm der gemessenen Spannung an einem erfindungsgemäß modifiziertem Bauteil aus AlLi 5 mit SiC und

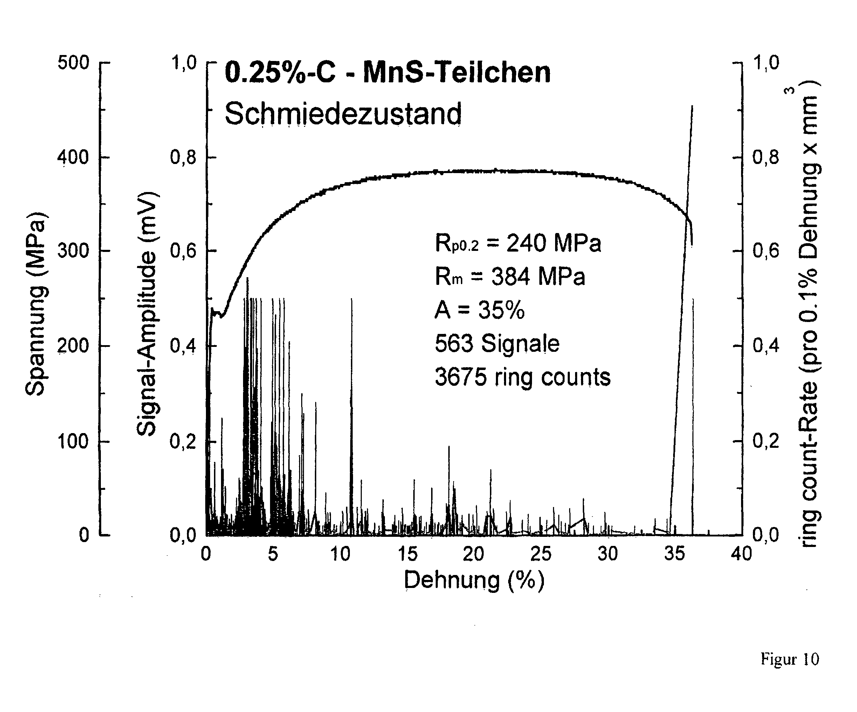

- Fig. 10: ein Diagramm der gemessenen Spannung an einem erfindungsgemäßen Bauteil aus einem 0,25 % C-Stahl mit MnS-Partikeln.

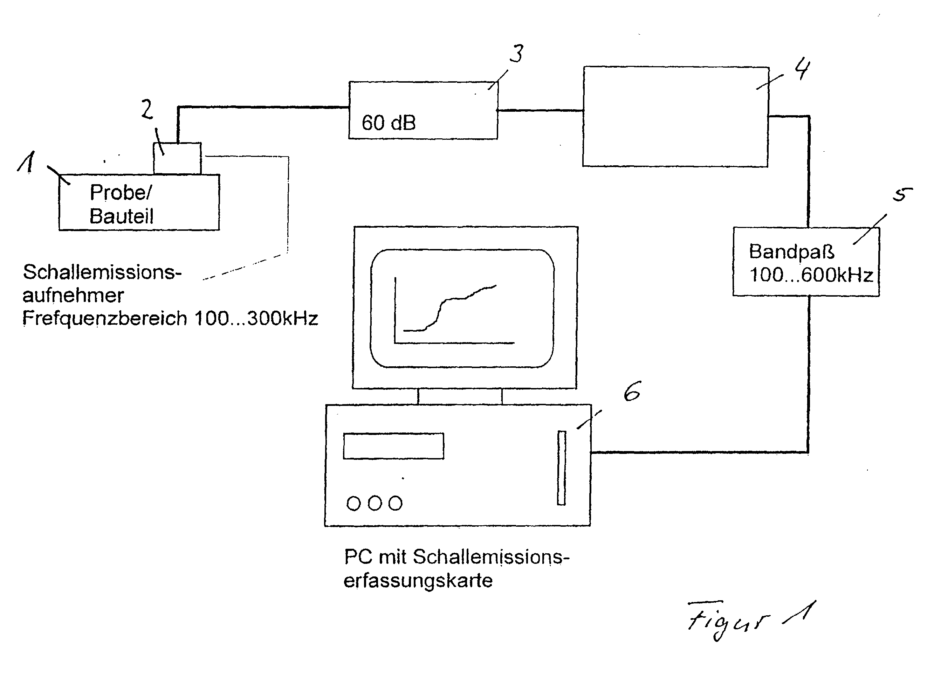

In der Figur 1 ist ein Blockschaltbild eines Meßaufbaus zur Durchführung einer Schallemissionsanalyse dargestellt. Dabei wird auf das Bauteil 1 ein Schallemissionsufnehmer 2 aufgesetzt und akustisch angekoppelt. Dabei kann der Schallemissionsaufnehmer 2 dauerhaft aber auch lösbar mit dem Bauteil 1 verbunden sein.

Über einen Vorverstärker 3, einen Koppler 4 und ein Bandpaßfilter 5 gelangen die verstärkten und selektierten Schallemissionssignale in eine Auswerteeinheit 6 (z.B. Personalcomputer). Die Auswertung erfolgt über Kalibrierwerte bzw. -verläufe, die in einem Speicher der Auswerteeinheit 6 abgelegt sind und mit den Meßwerten verglichen werden, um z.B. die Verformung oder die Streckgrenze bzw. deren Überschreitung zu erfassen.

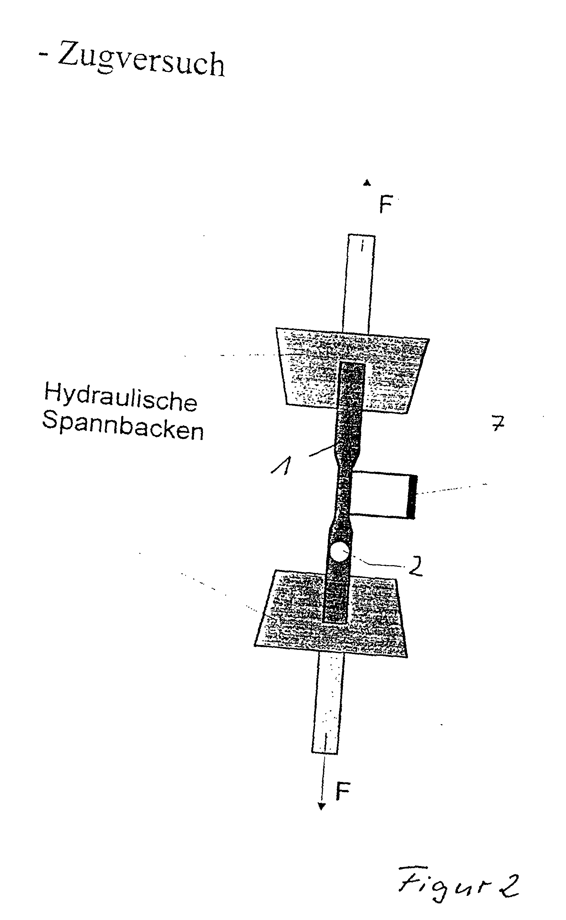

In der Figur 2 ist der Aufbau eines Zugversuches an einem Zugstab als Bauteil 1 schematisch dargestellt. Dabei wird eine definierte Zugkraft oder ein entsprechend vorgebbarer Kraftverlauf aufgebracht und die Dehnung (Verformung) des Bauteils parallel mit einem herkömmlichen Dehnungsaufnehmer 7 ( z.B. mittels DMS) und einem Schallemissionsaufnehmer 2 gemessen.

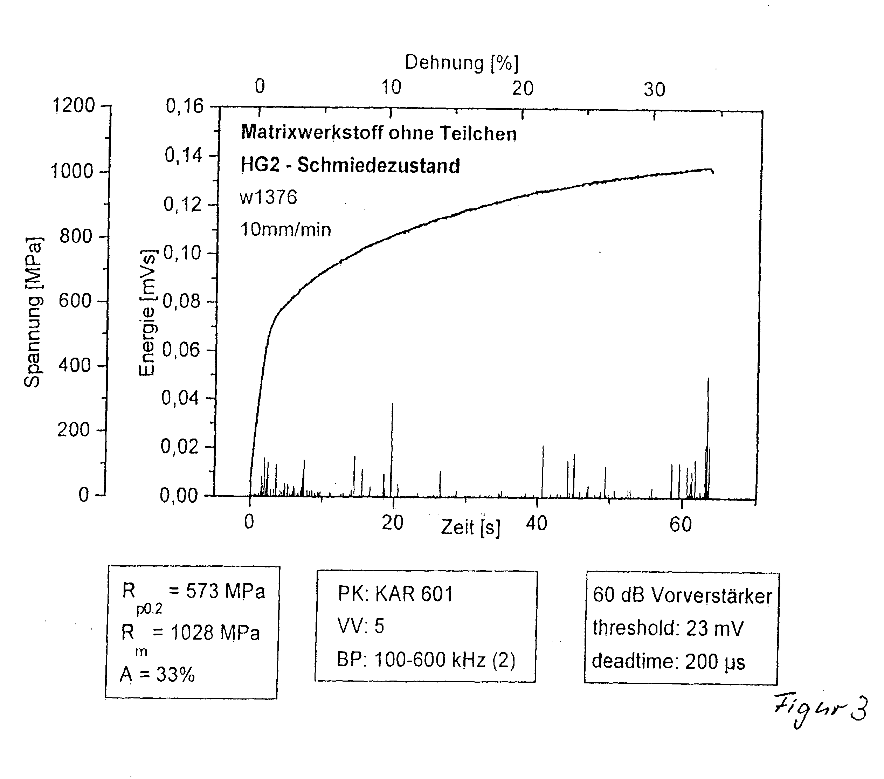

Das in der Figur 3 gezeigte Diagramm gibt entsprechend Figur 2 gemessene Meßwertverläufe an einem herkömmlichen Bauteil aus einem duktilen Stahl mit 8,8 Masse-% Cr, 8,4 Masse-% Ni, 4,2 Masse-% Mo, 1,8 Masse-% Mn, 1,7 Masse-% Si, 0,5 Masse-% C und 0,02 Masse-% S wieder. Dabei ist der Verlauf der Zugspannung zeitabhängig (Abzisse unten) und in Abhängigkeit der Dehnung (Abszisse oben) angegeben. Zusätzlich enthält das Diagramm den Verlauf der gemessenen Schallemissionsenergie.

Die einzelnen Schallemissionsenergieamplituden zeigen, daß diese Signale eine Auswertung der Verformung (Dehnung) oder das Erkennen des Überschreitens der Streckgrenze dieses Werkstoffes nicht zulassen, da ein Zusammenhang zwischen diesen Meßwerten und der Bauteilbeanspruchung nicht erkennbar und nachweisbar ist.

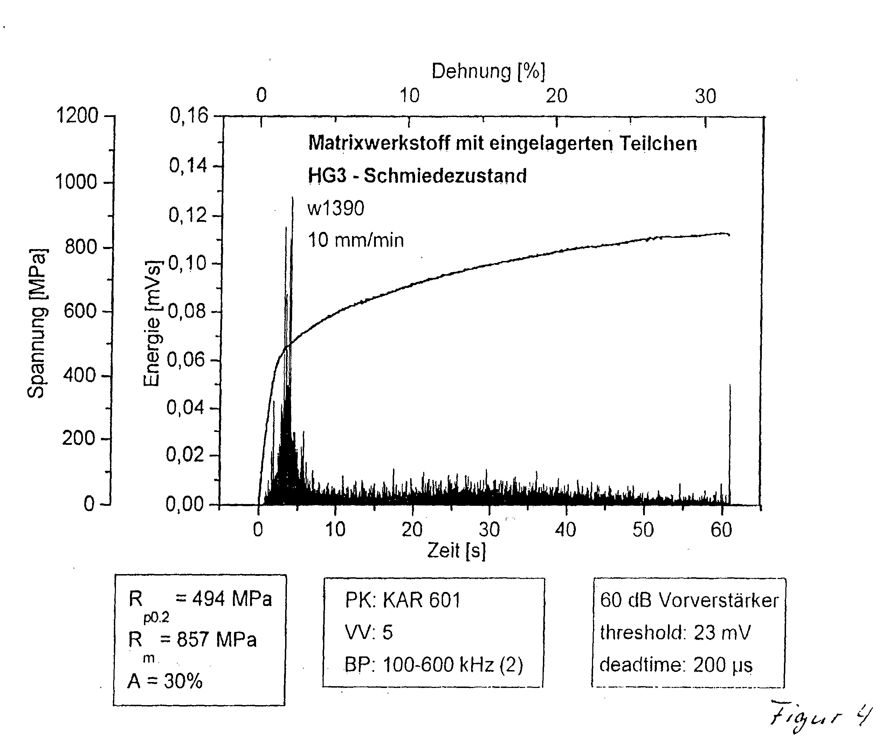

Im Gegensatz dazu ist dem Diagram nach Figur 4 deutlich zu entnehmen, daß die mit dem Schallemissionsaufnehmer gemessenen Werte sowohl in ihrer Verteilung, als auch die Amplituden aussagekräftiger sind. Dies ist für die Größe und Verteilung der einzelnen Amplituden der Fall. Die Meßwerte erreichen eine Größe, die oberhalb des Rauschfehlers liegen und demzufolge eine eindeutige Zuordnung möglich wird. Auch das eindeutige Erfassen der Streckgrenze ist dem Diagramm ohne weiteres zu entnehmen.

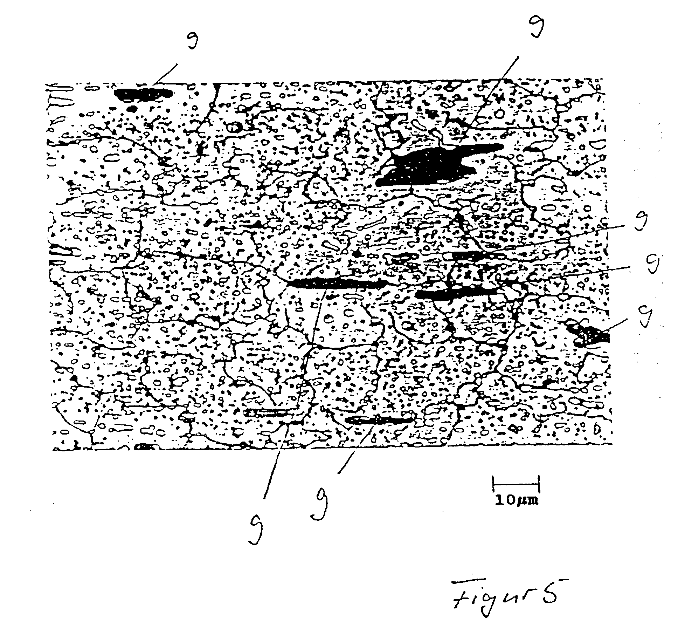

Bei diesem Beispiel wurde für ein erfindungsgemäßes Bauteil ein Stahl mit 8,8 Masse-% Cr, 8,4 Masse-% Ni, 4,2 Masse-% Mo, 1,8 Masse-% Mn, 1,7 Masse-% Si, 0,5 Masse-% C, 0,02 Masse-% S und 0,5-Masse-% MnS-Partikel 9 pulvermetallurgisch homogen eingebaut. Durch eine Warmverformung wurden die MnS-Partikel 9 plastisch verformt, wie dies in Figur 5 erkennbar ist. Die Größe der verformten Partikel 9 liegt bei diesem Beispiel nur im Bereich um 10 µm.

Die MnS-Partikel 9 sind dabei bei Raumtemperatur spröde und dies führt während einer Verformung überraschend dazu, daß das Überschreiten der Streckgrenze und die darüberhinausgehende plastische Verformung auch bei Werkstoffen, die eigentlich der Schallemissionsanalyse nicht zugänglich sind, detektierbar sind.

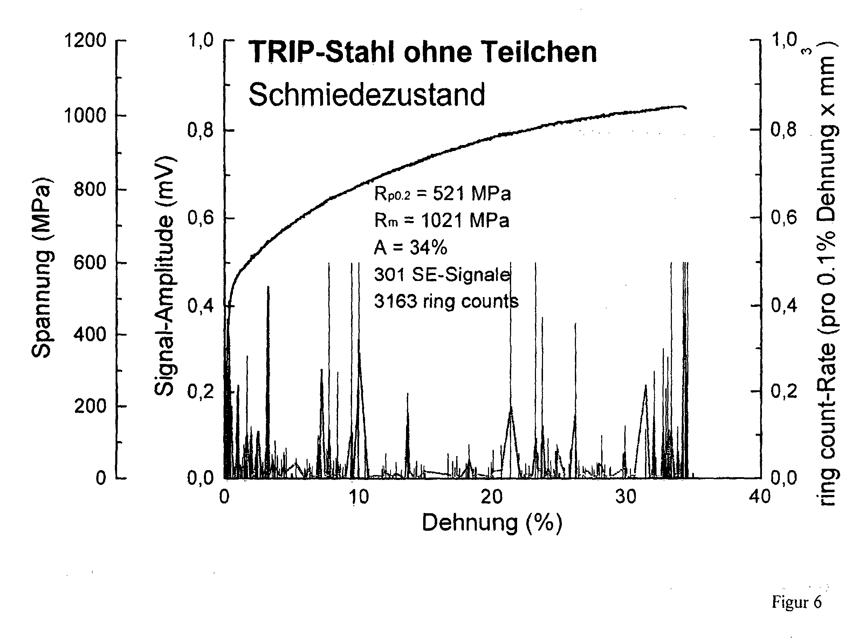

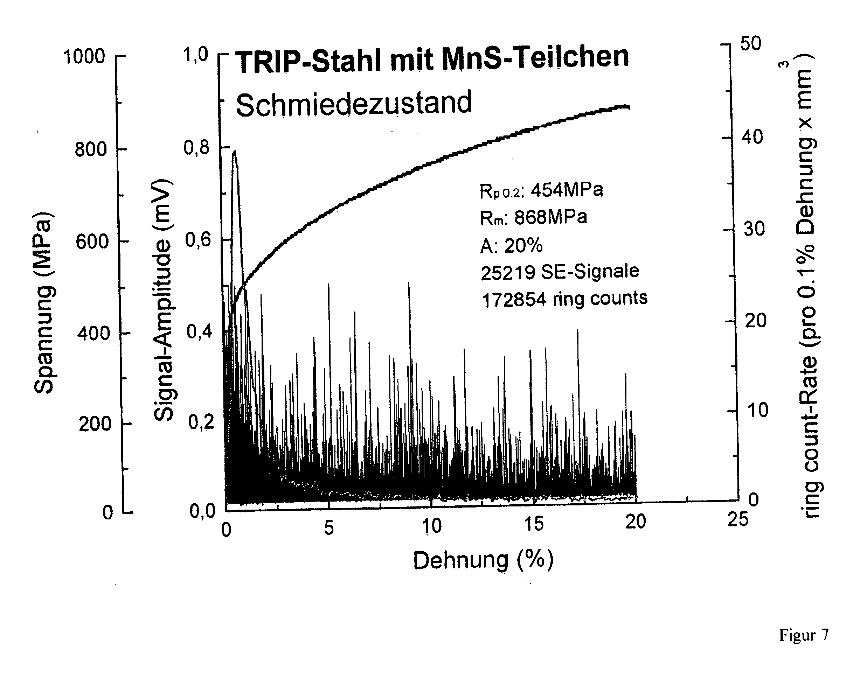

In den Figuren 6 und 7 sind weitere Diagramme dargestellt, bei denen eine Schallemissionsanalyse an Bauteilen mit weiteren Bezugsgrößen durchgeführt worden ist, wobei die entsprechenden Bauteile aus einem Werkstoff, mit einer Zusammensetzung, die dem nach Figur 3 für das Diagramm in Figur 6 und dem nach Figur 4 für das Diagramm in Figur 7 entspricht, verwendet werden.

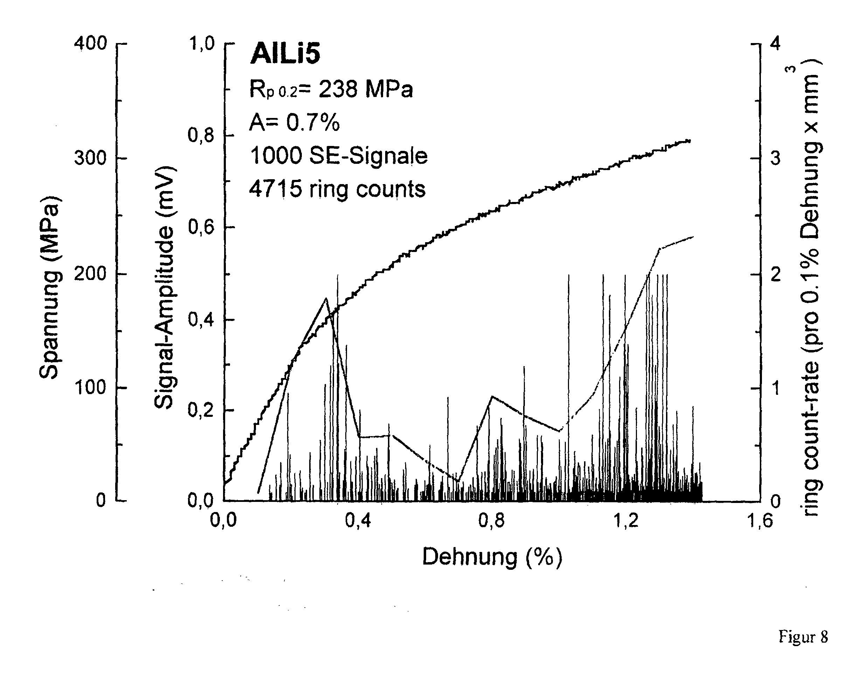

Die Figuren 7 und 8 zeigen Diagramme von Bauteilen aus AlLi 5, wobei das Diagramm die entsprechenden Meßwerte einer Schallemissionsanalyse an einem herkömmlichen und die Figur 8 mit einem erfindungsgemäß modifizierten AlLi 5, dem spröde Partikel aus SiC (17,5 Vol.-%) zugegeben worden sind, zeigt.

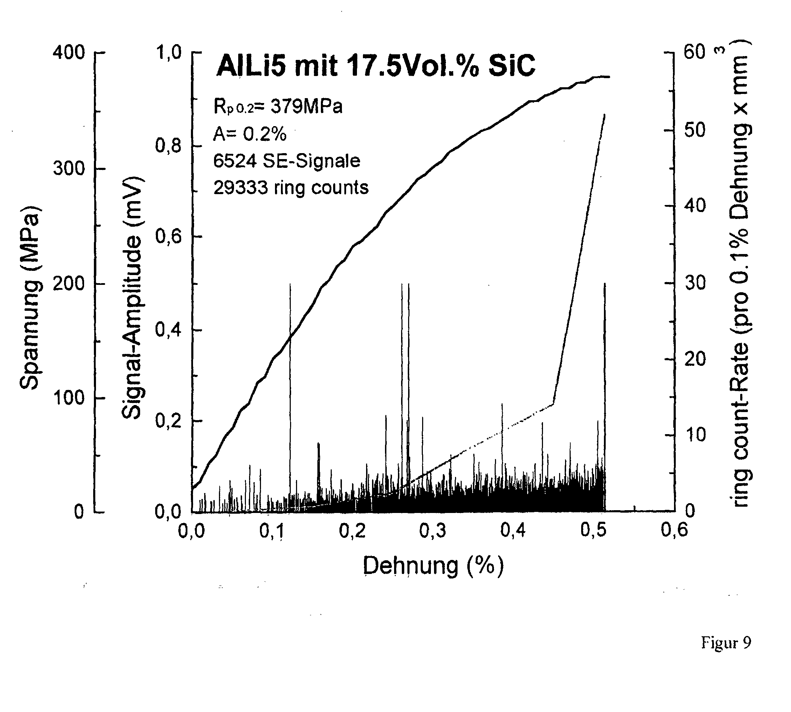

In Figur 9 ist dann weiter ein Diagramm von mittels einer Schallemissionsanalyse gemessenen Spannungen an einem erfindungsgemäßen Bauteil aus einem 0,25 % C-Stahl mit MnS-Partikeln (1 Vol.-%) wiedergegeben worden.

## Patentansprüche

1. Bauteil aus duktilem metallischem Werkstoff zur Bestimmung von Verformungen und/oder auf dieses einwirkender Belastungen mittels Schallemissionsanalyse, dem zumindest bei bis unterhalb einer Temperatur von 400 °C spröde Partikel, mit einer mittleren Teilchengröße zwischen 1 und 200 µm, zugesetzt sind und die Art, Anzahl und/oder Größe der spröden Partikel im Werkstoff so eingestellt ist,
daß an der Streckgrenze des Werkstoffes eine hohe Schallemissionsaktivität erreichbar ist
und/oder der Werkstoff im gesamten Verformungsprozeß schallemissionsaktiv bleibt.

2. Bauteil nach Anspruch 1, **dadurch gekennzeichnet, daß** die spröden Partikel unterhalb ihrer Schmelztemperatur plastisch verformbar sind.

3. Bauteil nach Anspruch 1 oder 2, **dadurch gekennzeichnet, daß** die spröden Partikel eingewalzt, eingepreßt oder plattiert sind.

4. Bauteil nach einem der Ansprüche 1 bis 3, **dadurch gekennzeichnet, daß** die spröden Partikel mit einem Anteil < 20 Vol.-% dem Werkstoff zugesetzt sind.

5. Bauteil nach Anspruch 4, **dadurch gekennzeichnet, daß** die spröden Partikel mit einem Anteil < 2 Vol.-% dem Werkstoff zugesetzt sind.

6. Bauteil nach einem der Ansprüche 1 bis 5, **dadurch gekennzeichnet, daß** spröde Partikel aus MnS oder SiO₂ (Quarzglas) zugesetzt sind.

7. Bauteil nach einem der Ansprüche 1 bis 5, **dadurch gekennzeichnet, daß** spröde Partikel aus Boriden, Nitriden oder nichtoxidischen Keramikwerkstoffen zugesetzt sind.

8. Bauteil nach einem der Ansprüche 1 bis 7, **dadurch gekennzeichnet, daß** die Partikel im Bauteil lokal differenziert eingebracht sind.

9. Bauteil nach einem der Ansprüche 1 bis 8, **dadurch gekennzeichnet, daß** die spröden Partikel mittels einer mechanischen oder thermomechanischen Behandlung plastisch, gestreckt verformt sind.

10. Bauteil nach einem der Ansprüche 1 bis 9, **dadurch gekennzeichnet, daß** die Kontur lokal begrenzte vorgebbare Schwachstellen ausbildend, gestaltet ist.

11. Verfahren zur Herstellung eines Bauteils nach einem der Ansprüche 1 bis 10, **dadurch gekennzeichnet, daß** es pulvermetallurgisch hergestellt wird.

12. Verfahren zur Herstellung eines Bauteils nach einem der Ansprüche 1 bis 10, **dadurch gekennzeichnet, daß** es schmelzmetallurgisch hergestellt wird.

13. Verfahren zur Bestimmung von Verformungen und/oder Belastungen an einem Bauteil aus einem duktilen metallischen Werkstoff, dem zumindest bei bis unterhalb einer Temperatur von 400 °C spröde Partikel zugesetzt sind, und mittels Schallemissionsanalyse die Anzahl von gemessenen Burstsignalen zeit-, spannungs- und/oder dehnungsabhängig bestimmt wird.

14. Verfahren nach Anspruch 13, **dadurch gekennzeichnet, daß** die Anzahl von Burstsignalen oberhalb eines vorgebbaren Grenzwertes bestimmt wird.

15. Verfahren nach Anspruch 13 oder 14, **dadurch gekennzeichnet, daß** eine bestimmte Anzahl von Burstsignalen mit einem oder mehreren werkstoff- und/oder bauteilspezifischen vorgebbaren Maximalwerten verglichen und bei Erreichen oder Überschreiten ein Signal generiert wird.

## Revendications

1. Composant formé d'un matériau métallique ductile servant à déterminer des déformations et/ou des charges qui agissent sur ce composant, au moyen d'une analyse d'émissions sonores, matériau auquel sont ajoutées des particules cassantes au moins jusqu'au-dessous d'une température inférieure à 400°C et possédant une taille moyenne comprise entre 1 et 200 µm, et dans lequel le type, le nombre et/ou la taille des particules cassantes dans le matériau sont réglés de telle sorte que l'on peut obtenir une activité intense d'émissions sonores au niveau de la limite d'étirage du matériau, et/ou le matériau reste actif pour des émissions acoustiques pendant l'ensemble du processus de déformation.

2. Composant selon la revendication 1, **caractérisé en ce que** les particules cassantes sont déformables plastiquement au-dessous de leur température de fusion.

3. Composant selon la revendication 1 ou 2, **caractérisé en ce que** les particules cassantes sont laminées, pressées et/ou plaquées.

4. Composant selon l'une des revendications 1 à 3, **caractérisé en ce que** les particules cassantes sont ajoutées en un pourcentage < 20 % en volume au matériau.

5. Composant selon la revendication 4, **caractérisé en ce que** les particules cassantes sont ajoutées en un pourcentage < 2 % en volume au matériau.

6. Composant selon l'une des revendications 1 à 5, **caractérisé en ce que** des particules cassantes formées de MnS ou en SiO₂ (verre quartzeux) sont ajoutées.

7. Composant selon l'une des revendications 1 à 5, **caractérisé en ce que** des particules cassantes formées de borures, de nitrures ou de matériaux céramiques non oxydés sont ajoutées.

8. Composant selon l'une des revendications 1 à 7, **caractérisé en ce que** les particules sont insérées d'une manière différenciée localement dans le composant.

9. Composant selon l'une des revendications 1 à 8, **caractérisé en ce que** les particules cassantes sont déformées plastiquement, en étant étirées, à l'aide d'un traitement mécaniquement ou thermomécanique.

10. Composant selon l'une des revendications 1 à 9, **caractérisé en ce que** le contour est conformé de manière à constituer des points faibles limités localement et pouvant être prédéterminés.

11. Procédé pour fabriquer un composant selon l'une des revendications 1 à 10, **caractérisé en ce qu'**on le fabrique selon la métallurgie des poudres.

12. Procédé pour fabriquer un composant selon l'une des revendications 1 à 10, **caractérisé en ce qu'**on le fabrique selon une métallurgie avec fusion.

13. Procédé pour déterminer des déformations et/ou des charges appliquées à un composant formé d'un matériau métallique ductile, auquel sont ajoutées des particules cassantes au moins jusqu'au-dessous d'une température de 400°C, et le nombre de signaux de salve mesurés est déterminé au moyen d'une analyse d'émissions acoustiques, en fonction du temps, de la contrainte et/ou de la dilatation.

14. Procédé selon la revendication 13, **caractérisé en ce que** le nombre de signaux de salve mesurés est déterminé au-dessus d'une valeur limite pouvant être prédéterminée.

15. Procédé selon la revendication 13 ou 14, **caractérisé en ce qu'**un nombre déterminé de signaux de salve sont comparés à une ou plusieurs valeurs maximales pouvant être prédéterminées, spécifiques au matériau et/ou au composant et un signal est produit lorsque ces valeurs sont atteintes ou dépassées.

## Claims

1. Component made from ductile, metallic material, for determining deformation and/or loads which act on this component by means of acoustic emissions analysis, to which particles which are brittle at least at a temperature of below 400°C and have a mean particle size of between 1 and 200 µm are added and the type, number and/or size of the brittle particles in the material is set in such a manner that a high acoustic emission activity can be achieved at the yield strength of the material and/or the material remains active in terms of acoustic emissions during the entire deformation process.

2. Component according to Claim 1, **characterized in that** the brittle particles are plastically deformable at below their melting temperature.

3. Component according to Claim 1 or 2, **characterized in that** the brittle particles are rolled in, pressed in or plated on.

4. Component according to one of Claims 1 to 3, **characterized in that** the brittle particles are added to the material in an amount of < 20% by volume.

5. Component according to Claim 4, **characterized in that** the brittle particles are added to the material in an amount of < 2% by volume.

6. Component according to one of Claims 1 to 5, **characterized in that** brittle particles of MnS or SiO₂ (quartz glass) are added.

7. Component according to one of Claims 1 to 5, **characterized in that** brittle particles of borides, nitrides or nonoxidic ceramic materials are added.

8. Component according to one of Claims 1 to 7, **characterized in that** the particles in the component are introduced in a locally differentiated manner.

9. Component according to one of Claims 1 to 8, **characterized in that** the brittle particles are deformed in a plastic, elongated manner by means of a mechanical or thermomechanical treatment.

10. Component according to one of Claims 1 to 9, **characterized in that** the contour is designed so as to form locally limited, predeterminable weak points.

11. Method for producing the component according to one of Claims 1 to 10, **characterized in that** it is produced by powder metallurgy.

12. Method for producing the component according to one of Claims 1 to 10, **characterized in that** it is produced by melt metallurgy.

13. Method for determining deformation and/or loads on a component made from a ductile metallic material, to which particles which are brittle at a temperature of below 400°C have been added, and the number of burst signals measured is determined, as a function of time, stress and/or elongation, by means of acoustic emissions analysis.

14. Method according to Claim 13, **characterized in that** the number of burst signals above a predeterminable limit value is determined.

15. Method according to Claim 13 or 14, **characterized in that** a certain number of burst signals is compared with one or more material- and/or component-specific predeterminable maximum values, and a signal is generated if these values are reached or exceeded.
